(19) Europäisches Patentamt
European Patent Office
Office européen des brevets

(11) EP 3 284 716 A1

(12) EUROPEAN PATENT APPLICATION

(43) Date of publication:
**21.02.2018 Bulletin 2018/08**

(51) Int Cl.:
***C01B 7/09*** *(2006.01)* ***C01B 11/20*** *(2006.01)*

(21) Application number: **16184675.3**

(22) Date of filing: **18.08.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicants:
- **AGFA NV**
  **2640 Mortsel (BE)**
- **Universiteit Gent**
  **9000 Gent (BE)**

(72) Inventors:
- **Dermaut, Wim**
  **2640 Mortsel (BE)**
- **Cappuyns, Bart**
  **2640 Mortsel (BE)**
- **Moens, Matthias**
  **2640 Mortsel (BE)**
- **Stevens, Christian**
  **2640 Mortsel (BE)**

(74) Representative: **Vanderstede, Els**
**AGFA NV**
**Intellectual Property Department**
**Septestraat 27**
**2640 Mortsel (BE)**

# (54) A PROCESS FOR MAKING BROMINATING AGENTS IN FLOW

(57) A process for making brominating agents in flow

A process for making a brominating agent comprising the step of continuously feeding a bromide source and an oxidizing agent into a continuous flow reactor.

EP 3 284 716 A1

**Description**

FIELD OF THE INVENTION

The present invention relates to a method for making brominating agents in flow starting from a bromide source.

BACKGROUND OF THE INVENTION

In organic synthesis, halogen atoms, such as for example fluorine, bromine, chlorine or iodine atoms, are often introduced at various positions in chemical compounds in order to alter the properties of these compounds in a desirable manner. Brominated compounds are widely used for example as biocides, flame retardants, dyes and pharmaceuticals.

General synthetic methods for introducing bromine atoms into organic compounds involve reaction of organic compounds with a bromine source or brominating agent such as for example elemental bromine ($Br_2$), hypobromite ($BrO^-$), monobromomalonitrile and/or N-bromosuccinimide (NBS). In a typical procedure, the compound to be brominated and the bromine source are mixed in a suitable solvent. Via a bromination reaction, the brominating agent will brominate the starting material to yield the desired brominated end product.

Monobromomalonitrile and/or N-bromosuccinimide (NBS) are solid reagents and are relatively easy and safe to handle, but the atom efficiency of these compounds per kilogram of reagent is relatively low which makes them less interesting from an economical point of view.

Hypobromite is typically generated by reacting elemental bromine with an aqueous base. Such a hypobromite solution has a limited stability and needs to be prepared shortly before use. In addition, use of elemental bromine is prefereably avoided as described below.

Elemental bromine is often used as brominating agent as it has an intrinsic high atom efficiency. However, a major disadvantage of bromination reactions using elemental bromine is the very high intrinsic safety risk of handling and/or transporting liquid elemental bromine. Bromine is very toxic, it has an occupational exposure limit of 0.1 ppm and is very volatile (229 mbar vapour pressure at 20 °C). Therefore bromine is considered to be a chemical with an extremely high exposure risk through inhalation. As a result, the use of liquid bromine at industrial scale is critical and requires the use of dedicated and expensive installations equipped with extra safety provisions.

In an alternative procedure, bromide salts are used as bromine source. Bromide salts such as sodium bromide, potassium bromide or tetrabutylammonium bromide are commercially available and represent an abundant and harmless source of bromine atoms. The compound to be brominated and a bromide salt are mixed in a suitable solvent, often water, and an appropriate oxidizing reagent is added. First, the bromide salts react with the oxidizing reagent whereby they are converted by an oxidation reaction into elemental bromine. Such a preparation of the elemental bromine has only been described in the art by means of so-called batch processes. As the elemental bromine is formed in situ, disadvantages such as handling and transport of $Br_2$ are avoided. Although this reaction procedure may work well in a number of cases, it has major drawbacks. Firstly, this reaction procedure is not suited for compounds having functional groups that are prone to oxidation because at least part of the oxidizing reagent will react with these functional groups leading to oxidised side products instead of the desired brominated compound. Secondly, elemental bromine may catalyse decomposition of the oxidizing agent, for example hydrogen peroxide, and as a result an excess of oxidizing agent is needed. Thirdly, as both the oxidation reaction and the bromination reaction are very exothermic and generate heat simultaneously, the heat being generated in these processes is difficult to control. Finaly, such a reaction set-up does not allow a different reaction temperature between the oxidation reaction and the bromination reaction.

US 2005/0049420 discloses a process for the N-halogenation of a compound having a N-halogenatable amido or imido nitrogen atom in the molecule, comprising the steps of feeding the compound to be halogenated, an inorganic base, elemental bromine and water with a pH in the range of 5.5 to 8.

There is an urgent need in the market for brominating agents which have a high atom efficiency, which involve limited safety risks and which are widely applicable at a low cost.

SUMMARY OF THE INVENTION

It is an object of the present invention, to provide a cost efficient and safe method for preparing brominating agents.

This object is realized by the method of claim 1 describing the generation of a brominating agent using flow chemistry. The method avoids handling of elemental bromine and the above mentioned problems related to batch reactions. The method involves two streams of reagents which are brought together in a continuous flow reactor, one flow comprising a bromide source and the other flow comprising at least one oxidizing agent. The obtained brominating agent may in a further step be added to a compound to be brominated. The major advantages of this new method using flow methodology are not only that the temperature applied for the formation of the brominating reagent inside the

continuous flow reactor is independent from the temperature which is required for the bromination reaction; but also that possible unwanted reactions of the oxidizing agent with the compound to be brominated are practically avoided. Furthermore, the reaction in flow provides a high yield, is less labour-intensive compared to batch reactions and is beneficial from a health and safety point of view as no elemental bromine is used as starting reagent.

Other features, elements, steps, characteristics and advantages of the present invention will become more apparent from the following detailed description of preferred embodiments of the present invention. Specific embodiments of the invention are also defined in the dependent claims.

DETAILED DESCRIPTION OF THE INVENTION

Definitions

| | |
|---|---|
| Substrate: | chemical compound to be brominated |
| Target compound: | brominated compound |
| Reaction in flow: | a chemical reaction carried out in a continuous flow reactor wherein the reagents are fed by means of continuous streams |
| Continuous flow reactor: | reactor were the reagents in flow meet and the chemical reaction takes place |

Flow chemistry is a well-established technique for use at a large scale when manufacturing large quantities of a given material as well as for production of smaller quantities of specialized products.

In flow chemistry, a chemical reaction is run in a continuously flowing stream. Pumps move reagents via tubes into a continuous flow reactor where the chemical reaction takes place. The reagents are preferably fluids but may be solid or gaseous. Pumps used to initiate flow of the reagents are well-known in the art.

Continuous flow reactors allow a good control over reaction conditions such as heat transfer and reaction time. Continuous flow reactors are for example tube reactors, plate reactors, coil reactors, microreactors or continuously stirred tank reactors (CSTR). The reactivity of the reagents and/or the scale of the specific reaction determine the optimal flow rate of the reagents and/or the preferred size (length, diameter) of the continuous flow reactor. The flow rate may be changed in time but is preferably constant throughout the reaction. The residence time of the reagents in the continuous flow reactor may be calculated from the volume of the reactor and the flow rate through it:

$$\text{Residence time} = \text{Reactor Volume} / \text{Flow Rate}$$

Therefore, to achieve a longer residence time, reagents can be pumped more slowly and/or a larger volume continuous flow reactor may be used. In order to obtain an optimal reaction, it is up to the person skilled in the art to adapt these above mentioned variables.

Because the heat-exchange area to volume ratio is large, endothermal and exothermal reactions can easily be thermostated. Moreover, flow reactions can be relatively easy automated and allow for unattended operation and experimental planning. Multi step reactions can be arranged in a continuous sequence which can be especially beneficial if intermediate compounds are unstable, toxic, or sensitive to air, since they will exist only momentarily and in very small quantities.

According to the present invention, there is provided a method whereby a brominating reagent is formed inside a continuous flow reactor. The method involves at least two streams which are brought together in the continuous flow reactor. One flow comprises a bromide source and the other flow comprises an oxidizing agent. The bromide source and the oxidizing agent may be in liquid form - i.e. neat or in a solution in an appropriate solvent such as for example water, alcohols (e.g. MeOH, EtOH, i-propanol), aceton, ethylacetate, acetonitrile, MEK, DMF, THF, N-methyl-2-pyrrolidon, N,N-dimethylaceetamide, DMSO, and/or mixtures thereof -, solid or in gaseous form; preferably the bromide source and the oxidizing agent are aqueous solutions. The brominating agent which is formed may then be added to the substrate for the bromination reaction. This second reaction may be carried out via a flow reaction or, alternatively, the reaction may be carried out in a batch reaction.

The concurrent feeds in the process of this invention are continuous feeds and are preferably two feeds. However, tri-feeds or other multi-feeds reactions are possible. Product formation occurs when the reagents come into contact with each other in the continuous flow reactor. This contact of the reagents is preferably rapid and intimate and therefore it is preferred to provide sufficient mixing to cause such rapid intimate contact between the reagents.

The reagents are preferably mixed before they enter the continuous flow reactor and/or inside the continuous flow reactor. For example SMV™ or SMX™ static mixers (commercially available from Sulzer) and/or a T-mixer may be

provided before the flow streams enter the continuous flow reactor while structured channels may be used inside the continuous flow reactor. Suitable continuous flow reactors are e.g. Plantrix™ or Protrix™ reactors (commercially available from Chemtrix), Flowplate™ reactors (commercially available from Lonza), Coil reactors preferably including a static mixer, and Spinning Disc reactors. Alternatively, a periodic flow may be applied in order to obtain appropriate mixing of the reagents. A periodic flow means that an oscillation is superimposed over a steady linear flow, preferably by means of a pulsation device ("pulsator"). If the amplitude of the oscillation is larger than the linear flow component, the direction of flow will be reversed during a certain period of time of the cycle. This is referred to as oscillatory flow. If the amplitude of the oscillation is smaller than the linear flow component, the net flow velocity remains positive at all times. This is referred to in the art as pulsatile flow.

The bromide source is preferably selected from hydrogen bromide, an organic bromide salt or an inorganic bromide salt. The inorganic bromide salt is preferably selected from an alkali metal bromide salt or an earth alkali metal bromide salt. Preferred alkali metal bromide salts are for example LiBr, NaBr, KBr, RbBr and CsBr; preferred earth alkali metal bromide salts are fro example $BeBr_2$, $MgBr_2$, $CaBr_2$, $SrBr_2$ and $BaBr_2$. The organic bromide salts are preferably selected from primary, secondary, tertiary ammonium salts such as for example triethyl ammonium bromide or diethyl ammonium bromide. Quaternairy ammonium salts, also called quaternairy amines, are highly preferred and may be represented by $NR_1R_2R_3R_4^+$ wherein $R_1$ to $R_4$ independently represent an optionally substituted alkyl, aryl or heteroaryl group. Examples of such compounds are tetrabutyl ammonium bromide, benzyl triethyl ammonium bromide, dodecyl trimethyl ammonium bromide, aryl triethyl ammonium bromide, etc. The bromide source is preferably an aqueous solution of a bromide salt.

The solution of the oxidizing agent is preferably an aqueous solution. Suitable oxidising reagents have a standard reduction potential with respect to the potential of the standard hydrogen electrode of preferably greater than 0.5 V, more preferably greater than 0.8 V and most preferably greater than 1.0 V. The oxidizing agent is preferably selected from, nitric acid, oxygen, chlorine, fluorine, ozone, peracids such as an optionally substituted peroxy benzoic acid, osmium tetroxide, potassium permanganate or potassium peroxomonosulfate. More preferably, the oxidizing agent is selected from hydrogen peroxide or hypochlorite. The concentration of a suitable aqueous solution containing the oxidizing agent mainly depends on the solubility of the oxidizing agent in the solvent and/or the kind of substrate and is preferably as high as possible.

The optional substituents on the peroxy benzoic acid may represent a halogen such as a fluorine, chlorine, bromine or iodine atom, a hydroxy group, an alkoxy group such as a methoxy or ethoxy group or an alkyl group such as a methyl, ethyl, propyl or isopropyl group.

The amount of bromide solution fed into the continuous flow reactor is preferably in excess such as 1 to 100% higher, more preferably 5 to 50% higher and most preferably 10 to 20% higher than the amount of oxidizing agent. As a result, oxidation - by for example unreacted oxidizing agent - of the substrate and/or target compound at a later stage can be avoided.

The brominating agent which is formed via the flow reaction is preferably elemental bromine ($Br_2$) or hypobromite ($BrO^-$) salt.

In a preferred embodiment of the present invention, hydrogen peroxide is used as oxidizing agent. The reaction between the bromide source and hydrogen peroxide results in formation of elemental bromine. Hydrogen peroxide is preferably an aqueous solution containing 1 to 50 %wt of hydrogen peroxide, more preferably 5 to 40 %wt of hydrogen peroxide and most preferably 10 to 30%wt of hydrogen peroxide.

In a further preferred embodiment of the present invention, a hypochlorite salt such as lithium, sodium or potassium hypochlorite, is used as oxidizing agent. The reaction between the bromide source and the hypochlorite salt results in formation of hypobromite salt. Hypochlorite salt is preferably an aqueous solution with a concentration of 5 to 50%wit, more preferably of 10 to 40%wt and most preferably of 15 to 20%wt.

The process of this invention is conducted so that the at least two separate flow streams occur continuously during the reaction. Once the continuous flows have been initiated, the flow rate of each separate flow may be adjusted as to establish and maintain the desired processing conditions for a steady-state reaction. Also, other reaction parameters such as temperature may be adjusted. Thus, once steady-state conditions have been achieved in the continuous flow reactor, the separate flows can be fed in appropriate proportions on a continuous basis whereby the reactor content maintains stable for virtually unlimited periods of time.

The reaction is preferably conducted without temperature control; i.e. at room temperature, typically 15 to 25°C, and at atmospheric pressure. If desired, however, the processes of this invention can be conducted using heating or cooling. For example, a flow of water or other heat exchange liquid for indirect heat exchange with the continuous flow reactor provides maintenance of steady-state temperature conditions in the reaction mixture. It is preferred that the temperature of the reaction mixture at any stage of the reaction preferably does not exceed about 90°C and more preferably does not exceed about 70°C. Preferably, in order to obtain a high yield, a temperature within the range of about 30 to about 70°C is used, more preferably a temperature between about 40 to about 60°C is used and most preferably a temperature between 45°C and 55°C.

The pressure at which the continuous flow reaction is conducted can be regulated by pressure regulator devices such as for example a backpressure regulator or a pressure reducing regulator. A high pressure can for example be obtained by adjusting the backpressure regulator whereby the pressure in the reactor may increase upto 100 bar. As a result, reaction temperatures above the normal boiling point of the reaction mixture can be achieved, for example upto 200°C.

Bromination is a particularly important reaction in organic synthetic chemistry covering a whole spectrum of substrates, both as end product and as reactive intermediate for further derivatisation. Preferred brominations are selected from bromine addition to the double and triple carbon-carbon bonds in alkenes and alkynes, the bromination of the α-position of aldehydes, ketones, esters, amides, carboxylic acids, sulfones, and nitriles, having at least one α-proton on an aliphatic group and the bromination of the active methylene groups having at least one proton on the active methylene position preferably selected from the group consisting of 1,3-diketones, 1,3-dialdehydes, β-ketoaldehydes, β-keto-esters, β-keto-amides, 1,3-dicarboxylic acids, 1,3-diesters, 1,3-diamides, β-carboxysulfones and esters thereof. Further preferred brominations are ring brominations of aromatic or heteroaromatic components, preferably electron rich aromatic compounds or electron rich heteroaromatic compounds. Phenoles, aryl ethers and anilines are preferred electron rich aromatic compounds. Preferred electron rich heteroaromatic rings are selected from thiophenes, furanes, pyrroles and indoles. Brominating agents such as hypobromite or bromine are also of importance in certain rearrangements and similar reactions, exemplified by a Hofmann rearrangement converting an amide into an amine and haloform reactions converting methyl ketones into carboxylic acid salts. Also these types of substrates are within the scope of the invention. Further brominations can be found in "Advanced Organic Chemistry : Reactions, Mechanisms and Structure, Fourth Edition, Jerry March (Wiley Interscience Publications, ISBN 0-471-60180-2)", herein incorporated as reference. Further bromination agents of interests and bromination reactions and substrates can be found in Methoden der Organischen Chemie (Houben-Weyl), Teil 5/4, Halogen Verbindungen, Brom und Jod, 13-516 (Vierte Auflage, Georg Thieme Verlag Stuttgart) and in Reactionen der Organischen Synthese (Cesare Ferri, Georg Thieme Verlag Stuttgart, ISBN 3-13-487401-6), also herein incorporated as reference.

Especially preferred substrates include optionally substituted acetophenone, diphenylethene, bisphenol A, malonic acid or any other organic substrate that is prone to bromination reactions. The bromination reaction is preferably carried out on a carbon atom. Highly preferred is the bromination reaction of compounds including a sulfone group such as optionally substituted dialkyl sulfone or aryl alkyl sulfone compounds.

In a preferred embodiment, the obtained brominating agent reacts subsequently with a substrate in a batch process. In this process, the obtained brominating agent is added in a continuous flow to the substrate. The substrate may be neat but is preferably in the form of an aqueous solution or a solution containing an appropriate solvent such as for example example water, alcohols (e.g. MeOH, EtOH, i-propanol), aceton, ethylacetate, acetonitrile, MEK, DMF, THF, N-methyl-2-pyrrolidon, N,N-dimethylaceetamide, DMSO, and/or mixtures thereof. It is preferred to operate with a slight excess of the brominating agent relative to the amount of bromine atoms to be inserted in the substrate - i.e. in the range of about 1 to about 8 atoms of bromine, more preferably 1 to 4 atoms of bromine and most preferably 1 to 2 atoms of bromine - relative to the amount of bromine atoms to be inserted in the substrate - which ensures full bromination without loss of substrate.

Examples of suitable alkyl groups are methyl, ethyl, n-propyl, isopropyl, n-butyl, 1-isobutyl, 2-isobutyl and tertiarybutyl, n-pentyl, n-hexyl, chloromethyl, trichloromethyl, iso-propyl, iso-butyl, iso-pentyl, neo-pentyl, 1-methylbutyl and iso-hexyl, 1,1-dimethyl-propyl, 2,2-dimethylpropyl and 2-methyl-butyl, cyclopropyl, cyclobutyl, cyclopentyl, cyclohexyl and methylcyclohexyl groups.

Examples of suitable aryl groups may be represented by for example an optionally substituted phenyl, benzyl, tolyl or an ortho- meta- or para-xylyl group, an optionally substituted naphtyl, anthracenyl, phenanthrenyl, and/or combinations thereof. Unless otherwise defined, the heteroaryl group herein is preferably a monocyclic or polycyclic aromatic ring comprising carbon atoms and one or more heteroatoms in the ring structure, preferably, 1 to 4 heteroatoms, independently selected from nitrogen, oxygen, selenium and sulphur. Preferred examples thereof include an optionally substituted furyl, pyridinyl, pyrimidyl, pyrazoyl, imidazoyl, oxazoyl, isoxazoyl, thienyl, tetrazoyl, thiazoyl, (1,2,3)triazoyl, (1,2,4)triazoyl, thiadiazoyl, thiofenyl group and/or combinations thereof.

The optional substituents on the alkyl, aryl, heteroaryl groups are preferably selected from hydroxy, -Cl, -Br, -I, -OH, -SH, -CN, $-NO_2$, an alkyl group such as a methyl or ethyl group, an alkoxy group such as a methoxy or an ethoxy group, an aryloxy group, a carboxylic acid group or an alkyl ester thereof, a sulphonic acid group or an alkyl ester thereof, a phosphonic acid group or an alkyl ester thereof, a phosphoric acid group or an an ester such as an alkyl ester such as methyl ester or ethyl ester, a thioalkyl group, a thioaryl group, thioheteroaryl, -SH, a thioether such as a thioalkyl or thioaryl, ketone, aldehyde, sulfoxide, sulfone, sulfonate ester, sulphonamide, an amino, an amido, ethenyl, alkenyl, alkynyl, cycloalkyl, alkaryl, aralkyl, aryl, heteroaryl or heteroalicyclic group and/or combinations thereof.

Monitoring the level of bromide present in the reaction mixture can be performed by use of pH meters, chemical pH indicators, and/or the like. When conducting the bromination reaction at temperatures above the boiling temperature of the brominating reagent, it is desirable to feed the brominating agent subsurface to the liquid phase of the aqueous

reaction mixture including the substrate.

Alternatively, the obtained brominating agent may be fed to a second continuous flow reactor to which the substrate is added in flow. The substrate is preferably fed in flow in the form of a solution containing a solvent such as for example water, alcohols (e.g. MeOH, EtOH, i-propanol), aceton, ethylacetate, acetonitrile, MEK, DMF, THF, N-methyl-2-pyrrolidon, N,N-dimethylaceetamide, DMSO, and/or mixtures thereof. An aqueous solution is preferred. As in the batch proces discussed above, also here it is preferred to operate with a slight excess of the brominating agent relative to the amount of bromine atoms to be inserted in the substrate - i.e. in the range of about 1 to about 8 atoms of bromine, more preferably 1 to 4 atoms of bromine and most preferably 1 to 2 atoms of bromine - relative to the amount of bromine atoms to be inserted in the substrate - which ensures full bromination without loss of substrate. The flow rates of both the solution containing the substrate and the solution containing the brominating agent should be adapted to the specific bromination reaction. The skilled person can depending on the specific reaction, adapt the reaction conditions such as temperature, residence time and/or flow rate in order to obtain a high yield reaction

Other compounds that may be included in the reaction mixture, provided they have no adverse effect upon the conduct of the process, are for example acids or bases, catalysts or organic solvents e.g. N, N-dimethylformamide, dimethylsulfoxide, alkanols, toluene, tetrahydrofuran or other saturated ethers, or the like.

The following Examples are presented to illustrate the practice of, and advantages made possible by, this invention. These Examples are not intended to limit, and should not be construed as limiting, the scope of this invention to the particular operations or conditions described therein.

## EXAMPLES

All materials used in the following examples were readily available from standard sources such as Sigma-Aldrich (Belgium) and Acros (Belgium) unless otherwise specified. The target compounds used in the Examples are only illustrative to the invention.

1. Bromination with hypobromite

**Synthesis of sodium hypobromite in flow**

Reaction scheme:

$$NaBr + NaOCl \rightarrow NaOBr + NaCl$$

Reaction procedure:

- Two aqueous solutions are prepared and combined in a flow reactor in order to generate a solution containing hypobromite:

  **Solution A** comprises a 40 % w/w of sodium bromide in water (400 gram sodium bromide + 600 gram water). Sodium bromide was purchased from Bromine Compounds Ltd (Israel) and dissolved in demineralized water to obtain a clear solution.

  **Solution B** is a commercially available concentrated bleach solution (13% by weight sodiumhypochlorite in water as determined by titration at Agfa Materials, product purchased from Acros Belgium, freshly used).

- Stream A was pumped through the flow reactor at a rate of 0.214 ml/min, stream B was pumped through the flow reactor at a rate of 0.546 ml/min. This corresponds to a molar ratio of 1.043 mole of sodium bromide per mole of sodium hypochloride.
- Pumping was achieved by using two syringe pumps (NE300 type, purchased from Prosense, The Netherlands) with plastic disposable 100 ml syringes.
- The flow reactor contains 336 cm of teflon tubing with an internal diameter of 2.4 mm, resulting in a total reactor volume of 15.2 ml. With the given flow rates for stream A and stream B, this corresponds to a residence time inside the flow reactor of 20 minutes.

- The flow reactor was exposed to ambient air, no active heating or cooling was provided, the temperature inside the flow reactor remained close to room temperature.
- Using this setup, a constant stream 0.76 ml/min of hypobromite solution in water was produced at the outlet of the flow reactor.

**Bromination with hypobromite**

Reaction scheme:

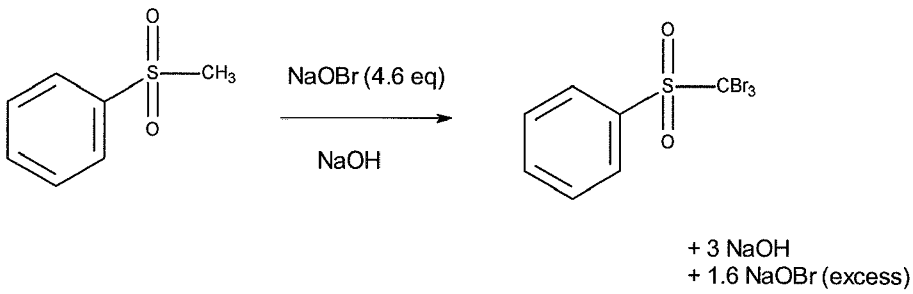


- In a stirred 100 ml reactor (Easymax, purchased from Mettler Toledo, provided with a propeller type overhead stirrer) the following starting solution was prepared: 2.37 g (15 mmol) of methyl phenyl sulfone 99% (CAS 3112-85-4, purchased from Acros Belgium), 2.42 g of ter-butyl ammonium bromide 99% (CAS 1643-19-2, phase transfer catalyst, purchased from Acros Belgium), and 28.71 g of toluene (technical grade, purchased from Acros Belgium).
- This mixture was heated to a reaction temperature of 40 °C while stirring (300 rpm, propeller stirrer). When a stable reaction temperature is obtained, 3.34 ml of a 50% weight solution of potassium hydroxide in water is added (technical grade, purchased from Acros Belgium).
- To this stirred toluene solution, the outlet of the above described flow reactor was dosed during 60 minutes. This corresponds to a total volume of 45.6 ml containing 72 mmole of sodium bromide and 69 mmole of sodium hypochlorite. This corresponds to 4.6 mole of generated sodium hypobromite per mole of substrate (methyl phenyl sulfone).
- Simultaneously, 10.03 ml of a 50% weight solution of potassium hydroxide in water was dosed over 60 minutes, using a syringe pump (NE300 type, purchased from Prosense, The Netherlands).
- When dosing was completed, the reaction mixture was further stirred at 40°C for 1 hour, and subsequently cooled to room temperature.
- 3 ml of demineralised water was added in order to dissolve any precipitated salt formed.
- The aqueous lower layer was removed and discarded.
- The organic layer is extracted 3 times with 30 ml of demineralised water (90 ml in total). During the first extraction a coloured intermediate layer (between the oragnic and aqueous phase) is observed. Is is important to keep this layer together with the organic layer.
- After these extractions, the remaining toluene layer is evaporated and a white powder is recovered. In total 5 g of product is recovered (85% isolated yield).
- This product is analysed by H-NMR and C-NMR (Bruker, 400 MHz). The obtained H-NMR and C-NMR spectra all confirm the intended target compound, i.e. the tri-brominated methyl phenyl sulfone (CAS 17025-47-7).
- Standard reversed phase (C18) HPLC-MS analysis confirmed a purity of >99% (area % UV/VIS at maximum absorption), with a mass spectrum in accordance with the tri-brominated methyl phenyl sulfone (CAS 17025-47-7).

2. Bromination with elemental bromine

**Synthesis of elemental bromine in flow**

- Hydrogen bromide (48 %wt in $H_2O$, 8.78M, purchased from Acros Belgium) was pumped together with $H_2O_2$ (35% in $H_2O$, 11.7 M, purchased from Acros Belgium) via a T-piece in a tubular reactor (made of teflon tubing) with peristaltic V3-pumps (as part of the Vapourtec E-series equipment, commercially available from Vapourtec) to obtain a bromine in water solution. In a typical experiment, the hydrogen bromide solution is pumped at flow rate of 1.6 ml/min, and the hydrogen peroxide solution at a rate of 0.4 ml/min. This corresponds to a ratio of 3 moles of hydrogen bromide per mole of hydrogen peroxide.
- The T-piece and a first part of the reactor (approx. 0.1-0.2 ml) were cooled to 0°C. Subsequently the reaction was further conducted in a second part of the reactor at 50°C, with a residence time of 5 minutes. The outlet of the reactor, containing a solution of elemental bromine in water, was dripped to a solution of the substrate in the solvent in the examples discussed below.

**Bromination reaction : Bromination of Bisphenol-A**

- A solution was prepared containing 1 g of Bisphenol-A (purchased from Acros Belgium) and 4.4 ml of ethanol. To this solution, a stream of bromine in water generated in flow - as described above - is added. In total 4 equivalents of bromine versus Bisphenol-A were added.
- The reaction mixture was stirred at room temperature for 15 minutes, after which the orange-brown colour of bromine had disappeared.
- The formed precipitate was filtered, washed with water and dried. 90% isolated yield was achieved.
- Purity and molecular structure of 3,3',5,5'-tetrabromobisphenol-A were confirmed by H-NMR and C-NMR (400 MHz, Bruker).

**Bromination reaction : Bromination of E-Stilbene**

- A solution was prepared containing 1 g of E-Stilbene (purchased from Acros Belgium) and 5.6 ml of dichloromethane. To this solution at 0°C, a stream of bromine in water generated in flow - as described above - is added under vigorous stirring. In total 1 equivalent of bromine versus E-Stilbene was added.
- The reaction mixture was stirred at 0°C for 15 minutes and subsequently heated to room temperature, after which the orange-brown colour of bromine had disappeared.
- The formed precipitate was filtered, washed with water and dried. 76% isolated yield was achieved.
- Purity and molecular structure of the 1,2-dibromo-1,2-diphenylethane were confirmed by H-NMR and C-NMR (400 MHz, Bruker).

**Bromination reaction : Acetophenone**

- 1 g of acetophenone (purchased from Acros Belgium) and 8.33 ml of water were stirred at 0°C, an emulsion was obtained. To this emulsion, a stream of bromine in water generated in flow - as described above - is added. In total 1 equivalent of bromine versus acetophenone was added.
- The reaction mixture was stirred at 0°C for 15 minutes, subsequently heated to room temperature and stirred at room temperature for 24 hours, after which the orange-brown colour of bromine had disappeared.
- The crude mixture was quenched by portion wise addition of saturated sodium bicarbonate solution in water, in order to remove the excess hydrogen bromide. An extraction was performed three times with dietylether, after which the organic layer was dried over magnesiumsulfate and concentrated in vacuum. Recrystallization of the crude mixture with diethylether /hexane delivered the pure 2-bromoacetophenone crystals in a 70% yield.
- Purity and molecular structure of the 2-bromoacetophenone were confirmed by H-NMR and C-NMR (400 MHz, Bruker).

**Bromination reaction : Malonic Acid**

- 1 g of malonic acid (purchased from Acros Belgium) was dissolved in 9.61 ml of water at 45°C. To this solution, a

stream of bromine in water generated in flow - as described above - is added. In total 3.3 equivalents of bromine versus malonic acid were added.

- The reaction mixture was stirred at 45°C for 24 hours, after which the orange-brown colour of bromine had disappeared.
- Evaporation of the solvent in vacuo yielded the desired product. If desired, the product can be recrystallized from toluene. An isolated yield of 50% was obtained.
- Purity and molecular structure of the tribromoacetic acid were confirmed by H-NMR and C-NMR (400 MHz, Bruker).

## Claims

**1.** A process for making a brominating agent comprising the step of continuously feeding a bromide source and an oxidizing agent in a continuous flow reactor.

**2.** A process according to claim 1 wherein the bromide source is selected from hydrogen bromide or an organic or inorganic bromide salt.

**3.** A process according to claims 1 or 2 wherein the bromide source is selected from an alkali metal bromide salt, an earth alkali metal bromide salt or an ammonium bromide salt.

**4.** A process according to any of the preceding claims wherein the bromide source is selected from an alkali metal bromide salt.

**5.** A process according to any of the preceding claims wherein the oxidizing agents have a standard reduction potential, with respect to the potential of the standard hydrogen electrode, greater than 0.5 V.

**6.** A process according to any of the preceding claims wherein the oxidizing agents are selected from hydrogen peroxide, hypochlorite anion, nitric acid, oxygen, osmium tetroxide, chlorine, fluorine, ozone, peracids, potassium permanganate or potassium peroxomonosulfate.

**7.** A process according to any of the preceding claims wherein the oxidizing agent is hydrogen peroxide.

**8.** A process according to claims 1 to 6 wherein the oxidizing agent is hypochlorite anion.

**9.** A process according to claims 1 or 7 wherein the brominating agent is elemental bromine.

**10.** A process according to claims 1 or 8 wherein the brominating agent is hypobromite anion.

**11.** A process for brominating a substrate comprising the step of continuously feeding a brominating agent obtained by the process according to claims 1 to 10 to the substrate.

**12.** A process for brominating a substrate comprising the step of continuously feeding to a second continuous flow reactor:

(i) a feed stream including a brominating agent; and
(ii) a feed stream including the substrate,

**characterized in that** the brominating agent is obtained by the process according to claims 1 to 10.

**13.** A process according to claims 11 or 12 wherein the substrate is selected from alkenes, alkynes, aldehydes, ketones, esters, amides, carboxylic acids, sulfones, nitriles, 1,3-diketones, 1,3-dialdehydes, β-ketoaldehydes, β-keto-esters, β-keto-amides, 1,3-dicarboxylic acids, 1,3-diesters, 1,3-diamides, β-carboxysulfones and esters thereof, phenoles, aryl ethers, anilines, thiophenes, furanes, pyrroles and indoles.

**14.** A process according to claims 11 to 13 wherein the substrate is selected from an optionally substituted acetophenone, diphenylethene, bisphenol-A or malonic acid.

**15.** A process according to claims 11 to 14 wherein the substrate is a compound including a sulfone group.

Europäisches Patentamt
European Patent Office
Office européen des brevets

# EUROPEAN SEARCH REPORT

Application Number
EP 16 18 4675

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 029 732 A (CALLOUE GEORGES ET AL) 14 June 1977 (1977-06-14) * the whole document * ----- | 1-9 | INV. C01B7/09 C01B11/20 |
| X | EP 0 300 085 A1 (ETHYL CORP [US]) 25 January 1989 (1989-01-25) * claims * ----- | 1-6,9 | |
| X | US 4 031 194 A (OGAWA YOSHIHISA ET AL) 21 June 1977 (1977-06-21) * the whole document * ----- | 1-6,9 | |
| X | US 5 795 487 A (DALLMIER ANTHONY W [US] ET AL) 18 August 1998 (1998-08-18) * claims; examples * ----- | 1-6,8,10 | |

TECHNICAL FIELDS SEARCHED (IPC)
C01B

~~The present search report has been drawn up for all claims~~

1

| Place of search | Date of completion of the search | Examiner |
|---|---|---|
| The Hague | 2 February 2017 | Van der Poel, Wim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

Application Number

EP 16 18 4675

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-10

☐ The present supplementary European search report has been drawn up for those parts of the European patent application which relate to the invention first mentioned in the claims (Rule 164 (1) EPC).

Europäisches Patentamt
European Patent Office
Office européen des brevets

# LACK OF UNITY OF INVENTION SHEET B

Application Number
EP 16 18 4675

The Search Division considers that the present European patent application does not comply with the requirements of unity of invention and relates to several inventions or groups of inventions, namely:

1. claims: 1-10

A process for making a brominating agent comprising the step of continuously feeding a bromide source and an oxidizing agent in a continuous flow reactor.

---

2. claims: 11-15

A process for brominating a substrate comprising the step of continuously feeding a brominating agent obtained by the process according to claims 1 to 10 to the substrate.

---

# ANNEX TO THE EUROPEAN SEARCH REPORT ON EUROPEAN PATENT APPLICATION NO. EP 16 18 4675

This annex lists the patent family members relating to the patent documents cited in the above-mentioned European search report.
The members are as contained in the European Patent Office EDP file on
The European Patent Office is in no way liable for these particulars which are merely given for the purpose of information.

02-02-2017

| Patent document cited in search report | Publication date | Patent family member(s) | Publication date |
|---|---|---|---|
| US 4029732 A | 14-06-1977 | CA 1052535 A | 17-04-1979 |
| | | DE 2534541 A1 | 19-02-1976 |
| | | ES 439972 A1 | 01-03-1977 |
| | | FR 2283089 A1 | 26-03-1976 |
| | | GB 1463050 A | 02-02-1977 |
| | | IL 47847 A | 31-07-1978 |
| | | IT 1041329 B | 10-01-1980 |
| | | JP S5140395 A | 05-04-1976 |
| | | JP S5347315 B2 | 20-12-1978 |
| | | SU 579897 A3 | 05-11-1977 |
| | | US 4029732 A | 14-06-1977 |
| | | ZA 7504972 B | 29-09-1976 |
| EP 0300085 A1 | 25-01-1989 | DE 3783033 D1 | 21-01-1993 |
| | | DE 3783033 T2 | 15-04-1993 |
| | | EP 0300085 A1 | 25-01-1989 |
| | | IL 84306 A | 18-08-1992 |
| | | JP S6437402 A | 08-02-1989 |
| | | US 4978518 A | 18-12-1990 |
| US 4031194 A | 21-06-1977 | GB 1421904 A | 21-01-1976 |
| | | US 4031194 A | 21-06-1977 |
| US 5795487 A | 18-08-1998 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20050049420 A


### Non-patent literature cited in the description


- Advanced Organic Chemistry : Reactions, Mechanisms and Structure. Wiley Interscience Publications
- Methoden der Organischen Chemie (Houben-Weyl). **BROM ; JOD.** Halogen Verbindungen. Georg Thieme Verlag, 13-516
- **CESARE FERRI.** Reactionen der Organischen Synthese. Georg Thieme Verlag